# EUROPÄISCHE PATENTSCHRIFT

(11) **EP 3 158 292 B1**
(45) Veröffentlichungstag und Bekanntmachung des Hinweises auf die Patenterteilung: **19.09.2018**
(21) Anmeldenummer: 15721229.1
(22) Anmeldetag: 07.05.2015
(51) Int. Cl.: G01C 19/5733, G01C 19/5747

(54) **MIKROMECHANISCHES SENSORBAUTEIL FÜR EINEN DREHRATENSENSOR**
MICROMECHANICAL SENSOR COMPONENT FOR A ROTATION RATE SENSOR
ÉLÉMENT DE DÉTECTION MICROMÉCANIQUE DESTINÉ À UN CAPTEUR DE VITESSE DE ROTATION

(30) Priorität: 18.06.2014 DE 102014211646
(43) Veröffentlichungstag der Anmeldung: 26.04.2017
(73) Patentinhaber: Robert Bosch GmbH, 70442 Stuttgart (DE)
(72) Erfinder: OHMS, Torsten, 71665 Vaihingen/Enz-Aurich (DE); MAUL, Robert, 75181 Pforzheim (DE); HATTASS, Mirko, 70191 Stuttgart (DE); HOEPPNER, Christian, 70197 Stuttgart (DE); SCHMIDT, Benjamin, 70499 Stuttgart (DE); SCHEBEN, Rolf, 72762 Reutlingen (DE)
(86) Internationale Anmeldenummer: PCT/EP2015/060099
(87) Internationale Veröffentlichungsnummer: WO 2015/193028

(56) Entgegenhaltungen:
- US-A1- 2011 061 460
- US-A1- 2011 303 007
- US-A1- 2012 125 099

## Beschreibung

Die Erfindung betrifft ein mikromechanisches Sensorbauteil für einen Drehratensensor. Ebenso betrifft die Erfindung einen Drehratensensor.

### Stand der Technik

In der US 2011/0061460 A1 sind Drehratensensoren mit jeweils mehreren kreisförmig angeordneten seismischen Massen beschrieben. In einigen Ausführungsformen sind die kreisförmig angeordneten seismischen Massen von einem Rahmen umgeben, an welchem jede der eingerahmten seismischen Massen mit je einem Rahmen-Koppelelement angebunden ist. Die von dem jeweiligen Rahmen umgebenden seismischen Massen sollen derart an einer Basisfläche angebunden sein und so in Schwingbewegungen versetzbar sein, dass, sofern der jeweilige Drehratensensor um eine senkrecht zu der Basisfläche ausgerichtete Rotationsachse rotiert, die seismischen Massen zusammen mit dem umgebenden Rahmen in eine Drehbewegung um einen gemeinsamen Mittelpunkt versetzbar sind. Mittels einer Detektion der Drehbewegung durch Kammelektroden soll anschließend eine Drehrate festlegbar sein.

### Offenbarung der Erfindung

Die Erfindung schafft ein mikromechanisches Sensorbauteil für einen Drehratensensor mit den Merkmalen des Anspruchs 1 und einen Drehratensensor mit den Merkmalen des Anspruchs 9.

### Vorteile der Erfindung

Die vorliegende Erfindung schafft ein mikromechanisches Sensorbauteil für einen Drehratensensor, bei welchem die vier seismischen Massen und zumindest die erste Wippenstruktur auf einer vergleichsweise kleinen Fläche der Halterung ausbildbar/anordbar sind. Das mikromechanische Sensorbauteil ist somit auf einfache Weise vergleichsweise klein ausbildbar. Dies erleichtert ein Anordnen des mikromechanischen Sensorbauteils, bzw. des damit ausgestatteten Drehratensensors, an einem Körper, dessen Rotationsverhalten zu untersuchen ist. Außerdem reduziert die kleine Ausbildbarkeit des mikromechanischen Sensorbauteils eine Menge der dazu benötigten Materialien, wodurch das mikromechanische Sensorbauteil kostengünstiger herstellbar ist.

Gegenüber dem herkömmlichen Rahmen, welcher die seismischen Massen umläuft, weisen sowohl die erste Wippenstruktur allein als auch die erste und zweite Wippenstruktur zusammen einen reduzierten Flächenbedarf auf. Gleichzeitig ist mittels der ersten Wippenstruktur, bzw. der ersten und zweiten Wippenstruktur, ein elektrostatisches Anschnappen der Komponenten des mikromechanischen Sensorbauteils verhinderbar. Z.B. kann mittels der mindestens einen Wippenstruktur ein elektrostatisches Anschnappen von an mindestens einer der seismischen Masse ausgebildeten Aktorelektroden an fest an der Halterung angeordneten Statorelektroden verhindert werden. Selbst wenn das mikromechanische Sensorbauteil signifikant klein/flächensparend ausgebildet ist, muss somit nicht befürchtet werden, dass aufgrund eines elektrostatischen Anschnappens seiner Komponenten gegeneinander das mikromechanische Bauteil in einen Zustand übergeht, in welchem es seine Sensorfunktion nicht mehr ausführen kann. Mittels der vorliegenden Erfindung sind deshalb auch mikromechanische Sensorbauteile mit einer reduzierten Ausfallrate realisierbar.

Das mikromechanische Sensorbauteil umfasst auch eine zweite Wippenstruktur, welche zumindest über ein drittes Wippen-Koppelelement mit der ersten seismischen Masse und über ein viertes Wippen-Koppelelement mit der zweiten seismischen Masse verbunden ist und benachbart zu einer von der ersten seismischen Masse und der zweiten seismischen Masse weg gerichteten Außenseite der vierten seismischen Masse so an der Halterung angeordnet ist, dass die zweite Wippenstruktur in Bezug zu der Halterung in eine zweite Wippbewegung um eine vorgegebene zweite Drehachse versetzbar ist. Es wird darauf hingewiesen, dass trotz der Ausstattung des mikromechanischen Sensorbauteils mit der zweiten Wippenstruktur zusätzlich zu der ersten Wippenstruktur die insgesamt auf einer Fläche der Halterung auszubildenden beweglichen Komponenten des mikromechanischen Sensorbauteils einen gegenüber dem Stand der Technik reduzierten Flächenbedarf haben.

Vorzugsweise umfasst das mikromechanische Bauteil mindestens eine Aktoreinrichtung, welche mittels einer internen oder externen Steuer- und Auswerteeinrichtung so ansteuerbar ist, dass mittels der mindestens einen Aktoreinrichtung die erste seismische Masse und die zweite seismische Masse in mindestens eine erste Schwingbewegung entlang zumindest der ersten Schwingachse versetzbar sind und die dritte seismische Masse und die vierte seismische Masse in mindestens eine zweite Schwingbewegung entlang zumindest der zweiten Schwingachse versetzbar sind. Die in die mindestens eine erste Schwingbewegung versetzte erste und zweite seismische Masse und die in die mindestens eine zweite Schwingbewegung versetzte dritte und vierte seismische Masse können anschließend zum Nachweisen/Untersuchen einer Rotation des mikromechanischen Sensorbauteils (bzw. des damit ausgestatteten Drehratensensors) um mindestens eine vorgegebene Rotationsachse genutzt werden.

Vorzugsweise ist die mindestens eine Aktoreinrichtung mittels der internen oder externen Steuer- und Auswerteeinrichtung so ansteuerbar, dass mittels der mindestens einen Aktoreinrichtung die erste seismische Masse und die zweite seismische Masse in zwei antiparallele Schwingbewegungen entlang zumindest der ersten Schwingachse als die mindestens eine erste Schwingbewegung versetzbar sind und die dritte seismische Masse und die vierte seismische Masse in zwei antiparallele Schwingbewegungen entlang zumindest der zweiten Schwingachse als die mindestens eine zweite Schwingbewegung versetzbar sind. Unter zwei zueinander antiparallelen Schwingbewegungen können zwei gegenphasige/um 180° phasenverschobene Schwingbewegungen (bei gleicher Amplitude und mit derselben Periode) verstanden werden. Auf die Vorteile einer derartigen Anregung der ersten, zweiten, dritten und vierten seismischen Masse wird unten noch genauer eingegangen.

Bevorzugter Weise sind die erste, zweite, dritte und vierte seismische Masse derart verstellbar an der Halterung angeordnet, dass während einer Rotation des mikromechanischen Sensorbauteils zumindest um eine senkrecht zu der ersten Schwingachse und der zweiten Schwingachse ausgerichtete Rotationsachse die in die mindestens eine erste Schwingbewegung versetzte erste und zweite seismische Masse senkrecht zu der ersten Schwingachse auslenkbar sind und die in die mindestens eine zweite Schwingbewegung versetzte dritte und vierte seismische Masse senkrecht zu der zweiten Schwingachse auslenkbar sind. Vorteilhafterweise ist dadurch zumindest die erste Wippenstruktur in die erste Wippbewegung in Bezug zu der Halterung versetzbar. Insbesondere kann auch die zweite Wippenstruktur auf diese Weise in die zweite Wippbewegung in Bezug zu der Halterung versetzbar sein. Mittels des hier beschriebenen Mechanismus ist die Rotation des mikromechanischen Sensorbauteils (bzw. des damit ausgestatteten Drehratensensors) um die Rotationsachse leicht und verlässlich nachweisbar/untersuch bar.

Beispielsweise ist an der ersten Wippenstruktur mindestens eine Aktorelektrode ausgebildet, welche während der ersten Wippbewegung der ersten Wippenstruktur in Bezug zu mindestens einer an der Halterung angeordneten Statorelektrode verstellbar ist. Gegebenenfalls kann auch an der zweiten Wippenstruktur mindestens eine Aktorelektrode ausgebildet sein, welche während der zweiten Wippbewegung der zweiten Wippenstruktur in Bezug zu mindestens einer weiteren an der Halterung angeordneten Statorelektrode verstellbar ist. Die mindestens eine an den jeweiligen Elektroden abgegriffene Spannung, bzw. eine zwischen den jeweiligen Elektroden vorliegende Kapazität, ist mittels einfacher Logarithmen zum Nachweisen/Untersuchen der Rotation des mikromechanischen Sensorbauteils um die Rotationsachse auswertbar. Insbesondere können kostengünstige und wenig Bauraum benötigende Elektroniken zum Auswerten der mindestens einen Spannung und/oder Kapazität verwendet werden.

Vorzugsweise ist die mindestens eine Aktorelektrode an mindestens einem Eckenbereich der ersten Wippenstruktur, welcher jeweils in einem Zwischenspalt zwischen der ersten und dritten seismischen Masse oder zwischen der zweiten und dritten seismischen Masse teilweise hineinragt, ausgebildet. Auch sofern an der zweiten Wippenstruktur die mindestens eine Aktorelektrode ausgebildet ist, kann diese an mindestens einem Eckenbereich der zweiten Wippenstruktur, welcher jeweils in einem Zwischenspalt zwischen der ersten und vierten seismischen Masse oder zwischen der zweiten und vierten seismischen Masse teilweise hineinragt, liegen. Die Ausstattung zumindest der ersten Wippenstruktur mit der mindestens einen Aktorelektrode steigert somit nicht den Flächenbedarf der Komponenten des mikromechanischen Sensorbauteils.

Beispielsweise umfasst das mikromechanische Sensorbauteil zumindest ein erstes, zweites, drittes und viertes Massen-Koppelelement als das mindestens eine Massen-Koppelelement, wobei die erste seismische Masse über das erste Massen-Koppelelement mit der dritten seismischen Masse und über das zweite Massen-Koppelelement mit der vierten seismischen Masse verbunden ist, und die zweite seismische Masse über das dritte Massen-Koppelelement mit der dritten seismischen Masse und über das vierte Massen-Koppelelement mit der vierten seismischen Masse verbunden ist. Als Alternative oder als Ergänzung dazu kann das mikromechanische Sensorbauteil auch zumindest ein Koppelkreuz mit einer ersten, zweiten, dritten und vierten Zugfeder und einer Zwischenmasse als das mindestens eine Massen-Koppelelement umfassen, wobei die Zwischenmasse über die erste Zugfeder mit der ersten seismischen Masse, über die zweite Zugfeder mit der zweiten seismischen Masse, über die dritte Zugfeder mit der dritten seismischen Masse und über die vierte Zugfeder mit der vierten seismischen Masse verbunden ist. Somit besteht eine Vielzahl von Möglichkeiten zur Anbindung jeder der vier seismischen Massen über mindestens ein Massen-Koppelelement mit mindestens einer anderen der vier seismischen Massen.

Die vorausgehend beschriebenen Vorteile sind auch bei einem Drehratensensor mit einem derartigen mikromechanischen Sensorbauteil gewährleistet.

### Kurze Beschreibung der Zeichnungen

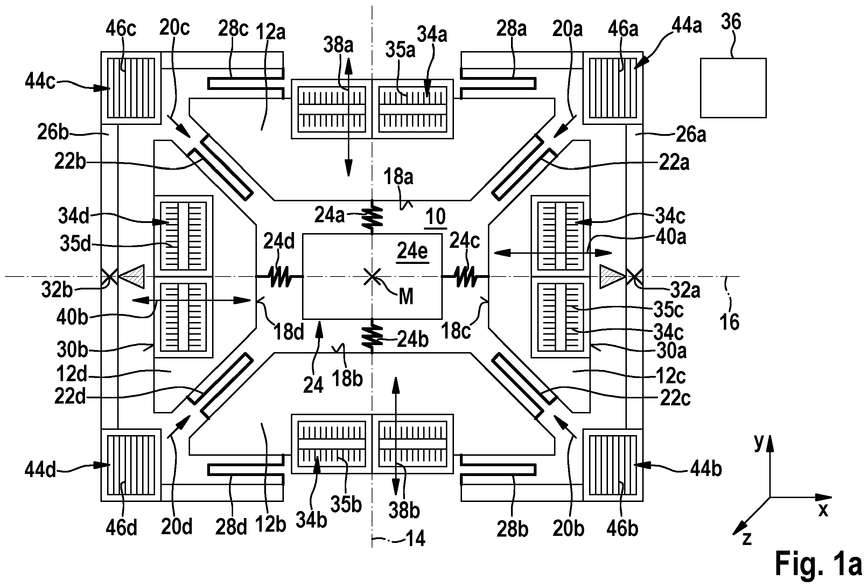

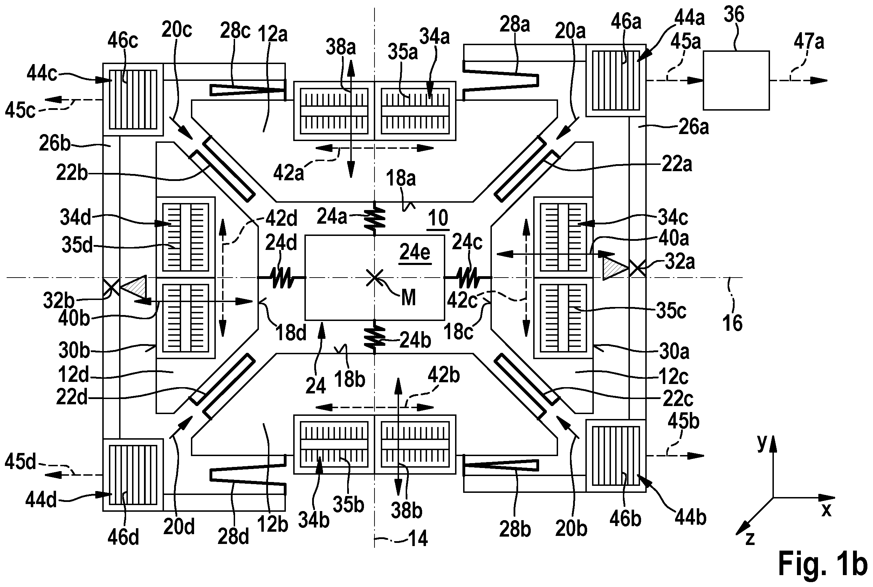

Weitere Merkmale und Vorteile der vorliegenden Erfindung werden nachfolgend anhand der Figuren erläutert, wobei Fig. 1a und 1b schematische Darstellungen einer Ausführungsform des mikromechanischen Sensorbauteils zeigen.

### Ausführungsformen der Erfindung

Fig. 1a und 1b zeigen schematische Darstellungen einer Ausführungsform des mikromechanischen Sensorbauteils.

Das mittels der Fig. 1a und 1b schematisch wiedergegebene mikromechanische Sensorbauteil ist an/in einem Drehratensensor einsetzbar. Es wird jedoch darauf hingewiesen, dass die Einsetzbarkeit des mikromechanischen Sensorbauteils nicht auf einen bestimmten Typ des Drehratensensors limitiert ist. Unter dem mit dem mikromechanischen Sensorbauteil ausstattbaren Drehratensensor kann auch ein Sensor zum Nachweisen/Untersuchen einer Rotationsbewegung eines Körpers ohne ein Ermitteln/Messen einer Drehrate verstanden werden. Außerdem kann das mikromechanische Sensorbauteil auch in einem anderen Gerät eingesetzt werden.

Das in Fig. 1a skizzierte mikromechanische Sensorbauteil umfasst eine Halterung 10 und eine erste, zweite, dritte und vierte seismische Masse 12a bis 12d. Die erste und zweite seismische Masse 12a und 12b sind derart verstellbar an der Halterung 10 angeordnet, dass die erste seismische Masse 12a und die zweite seismische Masse 12b zumindest entlang einer ersten Schwingachse 14 in Bezug zu der Halterung 10 verstellbar sind. Entsprechend sind auch die dritte und vierte seismische Masse 12c und 12d derart verstellbar an der Halterung 10 angeordnet, dass die dritte seismische Masse 12c und die vierte seismische Masse 12d zumindest entlang einer geneigt zu der ersten Schwingachse 14 ausgerichteten zweiten Schwingachse 16 in Bezug zu der Halterung 10 verstellbar sind. Bevorzugter Weise sind die erste Schwingachse 14 und/oder die zweite Schwingachse 16 parallel zu einer benachbarten Oberfläche der Halterung 10 ausgerichtet. Außerdem kann die erste Schwingachse 14 senkrecht zu der zweiten Schwingachse 16 verlaufen. Die in Fig. 1a dargestellte Ausrichtung der Schwingachsen 14 und 16 ist jedoch nur beispielhaft zu interpretieren.

Die vier seismischen Massen 12a bis 12d sind um einen von den vier seismischen Massen 12a bis 12d umgebenen Zwischenraum an der Halterung 10 verstellbar angeordnet. Z.B. können die vier seismischen Massen 12a bis 12d um einen Mittelpunkt M herum liegen. Insbesondere kann der Mittelpunkt M ein Schnittpunkt der Schwingachsen 14 und 16 sein. Wie in Fig. 1a dargestellt ist, kann das mikromechanische Sensorbauteil auch symmetrisch bezüglich mindestens einer der Schwingachsen 14 und 16 ausgebildet sein. Die Ausbildbarkeit des mikromechanischen Sensorbauteils ist jedoch nicht auf eine bestimmte Symmetrie limitiert. Man kann die Anordnung der vier seismischen Massen 12a bis 12d auch damit umschreiben, dass jede der vier seismischen Massen 12a bis 12d eine Stirnfläche 18a bis 18d aufweist, welche zu dem von den vier seismischen Massen 12a bis 12d umgebenen/aufgespannten Zwischenraum (bzw. zu dem Mittelpunkt M) ausgerichtet ist. Die Anordnung der vier seismischen Massen 12a bis 12d kann somit auch als kreisförmig umschrieben werden. Zwischen der ersten seismischen Masse 12a und der benachbarten dritten seismischen Masse 12c kann ein erster Zwischenspalt 20a liegen, während die zweite seismische Masse 12b mit der dritten seismischen Masse 12c einen zweiten Zwischenspalt 20b einschließen kann. Entsprechend kann ein dritter Zwischenspalt 20c zwischen der ersten seismischen Masse 12a und der benachbarten vierten seismischen Masse 12b liegen, während ein vierter Zwischenspalt 20d die zweite seismische Masse 12b von der vierten seismischen Masse 12b trennen kann.

Jede der vier seismischen Massen 12a bis 12d des mikromechanischen Sensorbauteils ist über mindestens ein Massen-Koppelelement 22a bis 22d und 24 mit mindestens einer anderen der vier seismischen Massen 12a bis 12d verbunden. Beispielsweise kann das mikromechanische Sensorbauteil zumindest vier Massen-Koppelelemente 22a bis 22d haben, wobei die erste seismische Masse 12a über ein erstes Massen-Koppelelement 22a mit der dritten seismischen Masse 12c und über ein zweites Massen-Koppelelement 22b mit der vierten seismischen Masse 12d verbunden ist, und die zweite seismische Masse 12b über ein drittes Massen-Koppelement 22c mit der dritten seismischen Masse 12c und über ein viertes Massen-Koppelelement 22d mit der vierten seismischen Masse 12b verbunden ist. Die vier Massen-Koppelelemente 22a bis 22d können insbesondere U-Federn sein, wobei vorzugsweise die U-Bögen der U-Federn zu dem Mittelpunkt M ausgerichtet sind. Die in Fig. 1 schematisch wiedergegebene Ausbildung der vier Massen-Koppelelement 22a bis 22d ist jedoch nur beispielhaft zu interpretieren.

Als Alternative oder als Ergänzung zu den vier Massen-Koppelelementen 22a bis 22d kann das mikromechanische Sensorbauteil auch ein Koppelkreuz 24 als das mindestens eine Massen-Koppelelement 22a bis 22d und 24 umfassen. Das Koppelkreuz 24 kann aus vier Zugfedern 24a bis 24d und einer Zwischenmasse 24e gebildet sein, wobei die Zwischenmasse 24e über eine erste Zugfeder 24a mit der ersten seismischen Masse 12a, über eine zweite Zugfeder 24b mit der zweiten seismischen Masse 12b, über eine dritte Zugfeder 24c mit der dritten seismischen Masse 12c und über eine vierte Zugfeder 24d mit der vierten seismischen Masse 12d verbunden sein kann. Anstelle der hier aufgeführten Beispiele können jedoch auch anders ausgebildete Massen-Koppelelemente 22a bis 22d und 24 zum Anbinden der vier seismischen Massen 12a bis 12d aneinander verwendet sein.

Das mikromechanische Sensorbauteil hat auch eine erste Wippenstruktur 26a, welche zumindest über ein erstes Wippen-Koppelelement 28a mit der ersten seismischen Masse 12a und über ein zweites Wippen-Koppelelement 28b mit der zweiten seismischen Masse 12b verbunden ist. Die erste Wippenstruktur 26a ist benachbart zu einer von der ersten seismischen Masse 12a und der zweiten seismischen Masse 12b (von dem Zwischenraum) weg gerichteten Außenseite 30a der dritten seismischen Masse 12c angeordnet. Man kann dies auch damit umschreiben, dass die erste Wippenstruktur 26a zumindest die Außenseite 30a der dritten seismischen Masse 12c seitlich überspannt. Auch Teilbereiche der ersten und zweiten seismischen Masse 12a und 12b können von der ersten Wippenstruktur 26a seitlich überspannt sein. Insbesondere kann die erste Wippenstruktur 26a eine halbrahmenförmige Form aufweisen.

Die erste Wippenstruktur 26a ist so an der Halterung 10 angeordnet, dass die erste Wippenstruktur 26a in Bezug zu der Halterung 10 in eine erste

Wippbewegung um eine vorgegebene erste Drehachse 32a versetzbar ist. Die erste Drehachse 32a kann senkrecht zu mindestens einer der Schwingachsen 14 und 16 ausgerichtet sein. Insbesondere kann die erste Drehachse 32a senkrecht zu der ersten Schwingachse 14 und der zweiten Schwingachse 16 ausgerichtet sein. Außerdem kann die erste Drehachse 32a senkrecht zu einer Oberfläche der Halterung 10, welche benachbart zu der ersten Wippenstruktur 26a liegt, verlaufen. Vorzugsweise weist die Form der ersten Wippenstruktur 26a eine Symmetrie bezüglich einer Symmetrieebene auf, wobei die erste Drehachse 32a innerhalb der Symmetrieebene liegt.

Zusätzlich hat das mikromechanische Sensorbauteil noch eine zweite Wippenstruktur 26b, welche zumindest über ein drittes Wippen-Koppelelement 28c mit der ersten seismischen Masse 12a und über ein viertes Wippen-Koppelelement 28d mit der zweiten seismischen Masse 12b verbunden ist. Die zweite Wippenstruktur 26b liegt benachbart zu einer von der ersten seismischen Masse 12a und der zweiten seismischen Masse 12b (von dem Zwischenraum) weg gerichteten Außenseite 30b der vierten seismischen Masse 12d. Auch die zweite Wippenstruktur 26b kann zumindest die Außenseite 30b der vierten seismischen Masse 12d seitlich überspannen. Ebenso können zusätzlich Teilbereiche der ersten und zweiten seismischen Masse 12a und 12b von der zweiten Wippenstruktur 26b seitlich überspannt sein. Des Weiteren kann auch die zweite Wippenstruktur 26a eine halbrahmenförmige Form haben.

Die zweite Wippenstruktur 26a ist so an der Halterung 10 angeordnet, dass die zweite Wippenstruktur 26b in Bezug zu der Halterung 10 in eine zweite Wippbewegung um eine zweite Drehachse 32b versetzbar ist. Die zweite Drehachse 32b kann senkrecht zu mindestens einer der Schwingachsen 14 und 16, bzw. zu der benachbart zu der zweiten Wippenstruktur 26b liegenden Oberfläche der Halterung 10, ausgerichtet sein. Die zweite Drehachse 32b ist vorzugsweise parallel zu der ersten Drehachse 32a ausgerichtet.

Mindestens eines der Wippen-Koppelelemente 28a bis 28d kann eine U-Feder sein, deren U-Bogen in einen von der jeweiligen Wippenstruktur 26a und 26b aufgespannten Innenraum hineinragt. Die in Fig. 1a und 1b wiedergegebene Form der Wippen-Koppelelemente 28a bis 28d ist jedoch nur beispielhaft zu interpretieren.

Wie anhand der Fig. 1a erkennbar ist, steigert die Ausstattung des mikromechanischen Bauteils mit den beiden Wippenstrukturen 26a und 26b kaum einen Flächenbedarf seiner Komponenten an der Halterung 10. Das mikromechanische Sensorbauteil ist deshalb vergleichsweise klein ausbildbar. Die relativ kleine Ausbildbarkeit des mikromechanischen Sensorbauteils erleichtert seine Integration in ein anderes Gerät, wie beispielsweise in ein Smartphone. Außerdem werden aufgrund der vorteilhaften Sensorgeometrie des mikromechanischen Bauteils nur reduzierte Mengen von Ausgangsstoffen zu dessen Herstellung verwendet. Das mikromechanische Sensorbauteil ist deshalb auch kostengünstig herstellbar. Gleichzeitig sind, wie nachfolgend genauer erläutert wird, mittels der Wippenstrukturen 26a und 26b unerwünschte Verstellbewegungen der seismischen Massen 12a bis 12d verhinderbar.

Vorzugsweise umfasst das mikromechanische Sensorbauteil mindestens eine Aktoreinrichtung 34a bis 34d, welche mittels einer internen oder externen Steuer- und Auswerteeinrichtung 36 ansteuerbar ist. Unter der internen Steuer- und Auswerteeinrichtung 36 kann eine an/in dem mikromechanischen Sensorbauteil ausgebildete/integrierte Steuer- und Auswerteeinrichtung 36 verstanden werden. Demgegenüber kann die externe Steuer- und Auswerteeinrichtung 36 als von dem mikromechanischen Sensorbauteil getrennt hergestelltes Bauteil eingesetzt werden.

Mittels der (nicht skizzierten) Ansteuerung der mindestens einen Aktoreinrichtung 34a bis 34d durch die Steuer- und Auswerteeinrichtung 36 können die erste seismische Masse 12a und die zweite seismische Masse 12b in mindestens eine erste Schwingbewegung 38a und 38b entlang zumindest der ersten Schwingachse 14 versetzbar sein. Entsprechend können mittels der mindestens einen Aktoreinrichtung 34a bis 34d auch die dritte seismische Masse 12c und die vierte seismische Masse 12d in mindestens eine zweite Schwingbewegung 40a und 40b entlang zumindest der zweiten Schwingachse 12 versetzbar sein. Fig. 1a zeigt an den seismischen Massen 12a bis 12d ausgebildete Antriebselektroden 35a bis 35d (als Unterkomponenten der mindestens einen Aktoreinrichtung 34a bis 34d), welchen jeweils (nicht dargestellte) unverstellbar an der Halterung 10 angeordnete Gegenelektroden zugeordnet sind. Mittels eines Anlegens von Spannungssignalen zwischen den Antriebselektroden 35a bis 35d und den Gegenelektroden ist die gewünschte Anregung der Schwingbewegungen 38a, 38b, 40a und 40b leicht ausführbar. Es wird jedoch darauf hingewiesen, dass die Antriebselektroden 35a bis 35d und Gegenelektroden nur ein mögliches Beispiel zur Ausbildung der mindestens einen Aktoreinrichtung 34a bis 34d sind. Unter der mindestens einen Aktoreinrichtung 34a bis 34d kann auch eine anders ausgebildete elektrostatische Aktoreinrichtung, eine magnetische Aktoreinrichtung und/oder eine piezoelektrische Aktoreinrichtung verstanden werden.

Vorteilhafterweise sind die erste seismische Masse 12a und die zweite seismische Masse 12b in zwei antiparallele Schwingbewegungen 38a und 38b entlang der ersten Schwingachse 14 (als die mindestens eine erste Schwingbewegung 38a und 38b) versetzbar. Entsprechend können auch die dritte seismische Masse 12c und die vierte seismische Masse 12b in zwei antiparallele Schwingbewegungen 40a und 40b entlang der zweiten Schwingachse 16 (als die mindestens eine zweite Schwingbewegung 40a und 40b) versetzbar sein. Unter zwei zueinander antiparallelen Schwingbewegungen können zwei gegenphasige/um 180° phasenverschobene Schwingbewegungen (bei gleicher Amplitude und mit derselben Periode) verstanden werden.

Fig. 1a gibt die Schwingbewegungen 38a, 38b, 40a und 40b der seismischen Massen 12a bis 12d ohne eine Beschleunigung der Halterung 10 wieder. Demgegenüber ist in Fig. 1b eine Situation dargestellt, in welcher das mikromechanische Sensorbauteil (bzw. der damit ausgestattete Drehratensensor) eine Rotation/Teilrotation um zumindest eine erste Rotationsachse z, welche senkrecht zu der ersten Schwingachse 14 und der zweiten Schwingachse 16 ausgerichtet ist, ausführt. Die erste, zweite, dritte und vierte seismische Masse 12a bis 12 sind derart verstellbar an der Halterung 10 angeordnet, dass während der Rotation des mikromechanischen Sensorbauteils um zumindest die erste Rotationsachse z die in die mindestens eine erste Schwingbewegung 38a und 38b versetzte erste und zweite seismische Masse 12a und 12b senkrecht zu der ersten Schwingachse 14 auslenkbar sind und die in die mindestens eine zweite Schwingbewegung 40a und 40b versetzte dritte und vierte seismische Masse 12c und 12d senkrecht zu der zweiten Schwingachse 16 auslenkbar sind. Insbesondere bei antiparallelen Schwingbewegungen 38a und 38b der ersten und zweiten seismischen Masse 12a und 12b und bei antiparallelen Schwingbewegungen 40a und 40b der dritten und vierten seismischen Masse 12c und 12d werden die erste und zweite seismische Masse 12a und 12b in zwei entgegengesetzte Richtungen senkrecht zu der ersten Schwingachse 14 und die dritte und vierte seismische Masse 12c und 12d in zwei weitere entgegengesetzte Richtungen senkrecht zu der zweiten Schwingachse 16 ausgelenkt. Die jeweiligen durch eine Corioliskraft während der Rotation um die erste Rotationsachse z ausgelösten Auslenkbewegungen 42a bis 42d der seismischen Massen 12a bis 12d sind in Fig. 1b eingezeichnet. Erkennbar ist, dass die Auslenkbewegungen 42a bis 42d der seismischen Massen 12a bis 12d in einer Drehbewegung/ Teildrehbewegung der seismischen Massen 12a bis 12d um den von den seismischen Massen 12a bis 12d umgebenen/aufgespannten Zwischenraum (bzw. um den Mittelpunkt M) resultieren, wodurch zumindest die erste Wippenstruktur 26a in die erste Wippbewegung in Bezug zu der Halterung 10 versetzbar ist. Man kann dies auch damit umschreiben, dass über die Wippen-Koppelelemente 28a bis 28d die Drehbewegung der seismischen Massen 12a bis 12d um den von den seismischen Massen 12a bis 12d umgebenen/aufgespannten Zwischenraum (bzw. um den Mittelpunkt M) derart auf die mindestens eine Wippenstruktur 26a und 26b übertragbar ist, dass die erste Wippenstruktur 26a in die erste Wippbewegung und die zweite Wippenstruktur 26b in die zweite Wippbewegung versetzbar sind.

Wie anhand von Fig. 1b erkennbar ist, lassen die Wippenstrukturen 26a und 26b die während der Rotation des mikromechanischen Sensorbauteils um die erste Rotationsachse z ausgelösten Auslenkbewegungen 42a bis 42d der seismischen Massen 12a bis 12d zu. Eine unerwünschte Auslenkung der ersten und zweiten seismischen Masse 12a und 12b in eine senkrecht zu der ersten Schwingachse 14 ausgerichtete gemeinsame Richtung ist jedoch mittels der Wippenstrukturen 26a und 26b verlässlich verhinderbar. Entsprechend können die Wippenstrukturen 26a und 26b auch eine unerwünschte gleichzeitige Bewegung der dritten und vierten seismischen Masse 12c und 12d in eine senkrecht zu der zweiten Schwingachse 16 ausgerichtete gemeinsame Richtung verlässlich unterbinden. Diese auch als Parallelbewegungen bezeichenbaren Bewegungen der seismischen Massen 12a bis 12d sind in der Regel unerwünscht, da sie zu einem elektrostatischen Anschnappen von Komponenten des mikromechanischen Bauteils aneinander führen können. Mittels der Wippenstrukturen 26a und 26b ist ein derartiges unerwünschtes elektrostatisches Anschnappen jedoch verlässlich verhindert. Insbesondere der mittels der Drehachsen 32a und 32b jeweils vorgegebene feste Drehpunkt einer Wippenstruktur 26a und 26b stellt eine verlässliche Möglichkeit zum Unterbinden des elektrostatischen Anschnappens dar. Somit ist auch nicht zu befürchten, dass das mikromechanische Sensorbauteil, bzw. der damit ausgestattete Drehratensensor, aufgrund des unerwünschten elektrostatischen Anschnappens zumindest zwischenzeitlich in einen funktionsbeeinträchtigten Zustand übergeht. Aufgrund der Ausstattung des mikromechanischen Sensorbauteils mit der Wippenstrukturen 26a und 26b sind auch keine störenden Eigenmoden der aus den vier seismischen Massen 12a bis 12d gebildeten Massenanordnung zu befürchten.

Die Wippenstrukturen 26a und 26b verbessern somit den Sicherheitsstandard des mikromechanischen Sensorbauteils signifikant. Gleichzeitig bleibt der oben schon beschriebene Vorteil des geringen Flächenbedarfs der Komponenten des mikromechanischen Sensorbauteils erhalten, was eine Kostenreduktion und eine höhere Integrationsdichte in einem elektrischen Gerät (z.B. basierend auf einer Kombination mit dem mikromechanischen Sensorbauteil zu einem sogenannten "System on Chip") ermöglicht.

Das mikromechanische Sensorbauteil kann auch mindestens eine Sensoreinrichtung 44a bis 44d haben, welche mittels der internen oder externen Steuer- und Auswerteeinrichtung 36 so betreibbar ist, dass mittels der mindestens einen von der internen oder externen Steuer- und Auswerteeinrichtung 36 angesteuerten Sensoreinrichtung 44a bis 44d mindestens ein Sensorsignal 45a bis 45d ausgebbar ist und mittels der internen oder externen Steuer- und Auswerteeinrichtung 36 unter Berücksichtigung des mindestens einen (von der mindestens einen Sensoreinrichtung 44a bis 44d bereitgestellten) Sensorsignals 45a bis 45d eine Information 47 bezüglich einer Rotationsbewegung des mikromechanischen Sensorbauteils festlegbar und ausgebbar ist. Die festlegbare Information 47 kann beispielsweise ein Warnsignal bezüglich einer gerade stattfindenden Rotation um die erste Rotationsachse z beinhalten. Als Alternative oder als Ergänzung kann die festlegbare Information auch mindestens eine physikalische Größe zur Beschreibung der Rotation um die erste Rotationsachse z, wie z.B. eine Drehrate, eine Drehgeschwindigkeit, eine Drehbeschleunigung, eine Winkelgeschwindigkeit und/oder eine Winkelbeschleunigung, umfassen.

In der Ausführungsform der Fig. 1a und 1b sind an der ersten Wippenstruktur 26a erste und zweite Aktorelektroden 46a und 46b als Untereinheiten der mindestens einen Sensoreinrichtung 44a bis 44d ausgebildet, welche während der ersten Wippbewegung der ersten Wippenstruktur 26 in Bezug zu zugeordneten (nicht skizzierten) unverstellbar an der Halterung 10 angeordneten Statorelektroden (der mindestens einen Sensoreinrichtung 44a bis 44d) verstellbar sind. Entsprechend weist auch die zweite Wippenstruktur 26b dritte und vierte Aktorelektroden 46c und 46d als Untereinheiten der mindestens einen Sensoreinrichtung 44a bis 44d auf, denen fest an der Halterung 10 angeordnete (nicht dargestellte) Statorelektroden (der mindestens einen Sensoreinrichtung 44a bis 44d) zugeordnet sind, wobei die dritten und vierten Aktorelektroden 46c und 46d der zweiten Wippenstruktur 26b mittels der Wippbewegung der zweiten Wippenstruktur 26b in Bezug zu den zugeordneten Statorelektroden verstellbar sind.

Es wird jedoch darauf hingewiesen, dass die Aktorelektroden 46a bis 46d an den Wippenstrukturen 26a und 26b nur ein Beispiel für die mindestens eine zum Nachweisen/Untersuchen der Rotation um die erste Rotationsachse z geeignete Sensoreinrichtung 44a bis 44d sind. Beispielsweise können auch mindestens eine anders ausgebildete elektrostatische Sensoreinrichtung, mindestens eine magnetische Sensoreinrichtung und/oder mindestens eine piezoelektrische Sensoreinrichtung zum Nachweisen/Untersuchen der Rotation um die erste Rotationsachse z eingesetzt werden.

Die Ausstattung der Wippenstrukturen 26a und 26b mit den Aktorelektroden 46a bis 46d ist nicht mit einer Inkaufnahme eines unerwünschten elektrischen Anschnappens der Aktorelektroden 46a bis 46d an den zugeordneten Statorelektroden verbunden. Stattdessen ist aufgrund der Ausbildung der Wippenstrukturen 26a und 26b das unerwünschte elektrostatische Anschnappen der Elektroden 46a bis 46d aneinander verlässlich unterbunden.

Vorteilhafterweise liegen die ersten Aktorelektroden 46a der ersten Wippenstruktur 26a an deren ersten Eckbereich. Insbesondere kann der erste Eckbereich der ersten Wippenstruktur 26a teilweise in den ersten Zwischenspalt 20a (zwischen der ersten und dritten seismischen Masse 12a und 12c) hineinragen. Entsprechend können die zweiten Aktorelektroden 46b der ersten Wippenstruktur 26a an deren zweiten Eckbereich ausgebildet sein. Auch der zweite Eckbereich der ersten Wippenstruktur 26a kann teilweise in den zweiten Zwischenspalt 20b (zwischen der zweiten und dritten seismischen Masse 12b und 12c) hineinragen. Die dritten Aktorelektroden 46c der zweiten Wippenstruktur 26b liegen in einer bevorzugten Ausführungsform an deren ersten Eckbereich, welcher vorzugsweise teilweise in den dritten Zwischenspalt 20c (zwischen der ersten und vierten seismischen Masse 12a und 12d) hineinragt. Des Weiteren können die vierten Aktorelektroden 46d der zweiten Wippenstruktur 26b an deren zweiten Eckbereich, der teilweise in den vierten Zwischenspalt 20d (zwischen der zweiten und vierten seismischen Masse 12b und 12d) hineinragt, ausgebildet sein. Die Ausstattung der Wippenstrukturen 26a und 26b mit den Aktorelektroden 46a bis 46d ist somit auf platzsparende Weise möglich.

In einer vorteilhaften Weiterbildung können die seismischen Massen 12a bis 12d auch derart an der Halterung 10 angebunden sein, dass sie in Bezug zu der Halterung 10 zusätzlich noch in eine Raumrichtung, welche senkrecht zu mindestens einer der Schwingachsen 14 und 16 (bzw. senkrecht zu der benachbarten Fläche der Halterung 10) ausgerichtet ist, verstellbar sind. Vorzugsweise sind die seismischen Massen 12a bis 12d in Bezug zu der Halterung 10 auch in eine Raumrichtung, welche senkrecht zu den Schwingachsen 14 und 16 verläuft, verstellbar. Z.B. können die seismischen Massen 12a bis 12d in Bezug zu der Halterung 10 auch entlang einer parallel zu der ersten Rotationsachse z, der ersten Drehachse 32a und/oder der zweiten Drehachse 32b ausgerichteten Raumrichtung verstellbar sein.

In einer derartigen Weiterbildung können die seismischen Massen 12a bis 12b auch zum Nachweisen/Untersuchen einer Rotation des mikromechanischen Sensorbauteils um eine senkrecht zu der ersten Schwingachse 14 ausgerichtete zweite Rotationsachse x und/oder einer Rotation des mikromechanischen Sensorbauteils um eine senkrecht zu der zweiten Schwingachse 16 verlaufenden dritten Rotationsachse y eingesetzt werden. Eine Rotation des mikromechanischen Bauteils um die senkrecht zu der ersten Schwingachse 14 ausgerichtete zweite Rotationsachse x bewirkt in der Regel (nicht dargestellte) Auslenkbewegungen der ersten und der zweiten seismischen Masse 12a und 12b in die senkrecht zu der ersten Schwingachse 14 und der zweiten Rotationsachse x ausgerichtete Raumrichtung. Entsprechend werden die dritte seismische Masse 12c und die vierte Masse 12d während einer Rotation des mikromechanischen Sensorbauteils um eine senkrecht zu der zweiten Schwingachse 16 ausgerichtete dritte Rotationsachse y (im Normalfall) in die senkrecht zu der zweiten Schwingachse 16 und der dritten Rotationsachse x ausgerichtete Raumrichtung ausgelenkt. Da in beiden Fällen die jeweilige Corioliskraft zu der Drehrate der jeweiligen rotatorischen Bewegung korreliert, können auch die entlang der Raumrichtung ausgerichteten Auslenkbewegungen der seismischen Massen 12a bis 12b zum Nachweisen/Untersuchen der jeweiligen rotatorischen Bewegung ausgewertet werden. In beiden Fällen können die aus den Rotationen resultierenden Auslenkbewegungen antiparallel sein, wodurch sich die Auslenkbewegungen leichter von Verbiegungen/Verformungen des mikromechanischen Sensorbauteils unterscheiden lassen.

Eine zum Erkennen der jeweiligen Auslenkbewegungen geeignete Sensoreinrichtung kann kapazitiv, magnetisch und/oder piezoelektrisch ausgelegt sein. Beispielsweise kann das mikromechanische Sensorbauteil fest an der Halterung 10 angebundene (nicht skizzierte) Plattenelektroden aufweisen, welche entlang der Raumrichtung beabstandet von den seismischen Massen 12a bis 12b sind. Mittels eines Auswertens von zwischen den Plattenelektroden und Teilbereichen der seismischen Massen 12a bis 12d vorliegenden Spannungen/Kapazitäten sind die jeweiligen Auslenkbewegungen erkennbar.

## Patentansprüche

1. Mikromechanisches Sensorbauteil für einen Drehratensensor mit:
einer Halterung (10);
einer ersten, zweiten, dritten und vierten seismischen Masse (12a bis 12d), welche um einen von den vier seismischen Massen (12a bis 12d) umgebenen Zwischenraum an der Halterung (10) verstellbar angeordnet sind;
wobei die erste, zweite, dritte und vierte seismische Masse (12a bis 12d) derart verstellbar an der Halterung (10) anordnet sind, dass die erste seismische Masse (12a) und die zweite seismische Masse (12b) zumindest entlang einer ersten Schwingachse (14) in Bezug zu der Halterung (10) verstellbar sind und die dritte seismische Masse (12c) und die vierte seismische Masse (12d) zumindest entlang einer geneigt zu der ersten Schwingachse (14) ausgerichteten zweiten Schwingachse (16) in Bezug zu der Halterung (10) verstellbar sind,
und wobei jede der vier seismischen Massen (12a bis 12d) über mindestens ein Massen-Koppelelement (22a bis 22d, 24) mit mindestens einer anderen der vier seismischen Massen (12a bis 12d) verbunden ist, und
einer ersten Wippenstruktur (26a), welche zumindest über ein erstes Wippen-Koppelelement (28a) mit der ersten seismischen Masse (12a) und über ein zweites Wippen-Koppelelement (28b) mit der zweiten seismischen Masse (12b) verbunden ist und benachbart zu einer von der ersten seismischen Masse (12a) und der zweiten seismischen Masse (12b) weg gerichteten Außenseite (30a) der dritten seismischen Masse (12c) so an der Halterung (10) angeordnet ist, dass die erste Wippenstruktur (26a) in Bezug zu der Halterung (10) in eine erste Wippbewegung um eine vorgegebene erste Drehachse (32a) versetzbar ist;
**dadurch gekennzeichnet, dass**
das mikromechanische Sensorbauteil eine zweite Wippenstruktur (26b) umfasst, welche zumindest über ein drittes Wippen-Koppelelement (28c) mit der ersten seismischen Masse (12a) und über ein viertes Wippen-Koppelelement (28d) mit der zweiten seismischen Masse (12b) verbunden ist und benachbart zu einer von der ersten seismischen Masse (12a) und der zweiten seismischen Masse (12b) weg gerichteten Außenseite (30b) der vierten seismischen Masse (12d) so an der Halterung (10) angeordnet ist, dass die zweite Wippenstruktur (26b) in Bezug zu der Halterung (10) in eine zweite Wippbewegung um eine vorgegebene zweite Drehachse (32b) versetzbar ist.

2. Mikromechanisches Sensorbauteil nach Anspruch 1, wobei das mikromechanische Sensorbauteil mindestens eine Aktoreinrichtung (34a bis 34d) umfasst, welche mittels einer internen oder externen Steuer- und Auswerteeinrichtung (36) so ansteuerbar ist, dass mittels der mindestens einen Aktoreinrichtung (34a bis 34d) die erste seismische Masse (12a) und die zweite seismische Masse (12b) in mindestens eine erste Schwingbewegung (38a) entlang zumindest der ersten Schwingachse (14) versetzbar sind und die dritte seismische Masse (12c) und die vierte seismische Masse (12d) in mindestens eine zweite Schwingbewegung (38b) entlang zumindest der zweiten Schwingachse (16) versetzbar sind.

3. Mikromechanisches Sensorbauteil nach Anspruch 2, wobei die mindestens eine Aktoreinrichtung (34a bis 34d) mittels der internen oder externen Steuer- und Auswerteeinrichtung (36) so ansteuerbar ist, dass mittels der mindestens einen Aktoreinrichtung (34a bis 34d) die erste seismische Masse (12a) und die zweite seismische Masse (12b) in zwei antiparallele Schwingbewegungen entlang zumindest der ersten Schwingachse (14) als die mindestens eine erste Schwingbewegung (38a) versetzbar sind und die dritte seismische Masse (12c) und die vierte seismische Masse (12d) in zwei antiparallele Schwingbewegungen entlang zumindest der zweiten Schwingachse (16) als die mindestens eine zweite Schwingbewegung (38b) versetzbar sind.

4. Mikromechanisches Sensorbauteil nach Anspruch 2 oder 3, wobei die erste, zweite, dritte und vierte seismische Masse (12a bis 12d) derart verstellbar an der Halterung (10) anordnet sind, dass während einer Rotation des mikromechanischen Sensorbauteils zumindest um eine senkrecht zu der ersten Schwingachse (14) und der zweiten Schwingachse (16) ausgerichtete Rotationsachse (z) die in die mindestens eine erste Schwingbewegung (38a) versetzte erste und zweite seismische Masse (12a, 12b) senkrecht zu der ersten Schwingachse (14) auslenkbar sind und die in die mindestens eine zweite Schwingbewegung (38b) versetzte dritte und vierte seismische Masse (12c, 12d) senkrecht zu der zweiten Schwingachse (16) auslenkbar sind, wodurch zumindest die erste Wippenstruktur (26a, 26b) in die erste Wippbewegung in Bezug zu der Halterung (10) versetzbar ist.

5. Mikromechanisches Sensorbauteil nach Anspruch 4, wobei an der ersten Wippenstruktur (26a) mindestens eine Aktorelektrode (46a, 46b) ausgebildet ist, welche während der ersten Wippbewegung der ersten Wippenstruktur (26a) in Bezug zu mindestens einer an der Halterung (10) angeordneten Statorelektrode verstellbar ist.

6. Mikromechanisches Sensorbauteil nach Anspruch 5, wobei die mindestens eine Aktorelektrode (46a, 46b) an mindestens einem Eckenbereich der ersten Wippenstruktur (26a), welcher jeweils in einen Zwischenspalt (20a, 20b) zwischen der ersten und dritten seismischen Masse (12a, 12c) oder zwischen der zweiten und dritten seismischen Masse (12b, 12c) teilweise hineinragt, ausgebildet ist.

7. Mikromechanisches Sensorbauteil nach einem der vorhergehenden Ansprüche, wobei das mikromechanische Sensorbauteil zumindest ein erstes, zweites, drittes und viertes Massen-Koppelelement (22a bis 22d) als das mindestens eine Massen-Koppelelement (22a bis 22d, 24) umfasst, und wobei die erste seismische Masse (12a) über das erste Massen-Koppelelement (22a) mit der dritten seismischen Masse (12c) und über das zweite Massen-Koppelelement (22b) mit der vierten seismischen Masse (12d) verbunden ist, und die zweite seismische Masse (12b) über das dritte Massen-Koppelelement (22c) mit der dritten seismischen Masse (12c) und über das vierte Massen-Koppelelement (22d) mit der vierten seismischen Masse (12d) verbunden ist.

8. Mikromechanisches Sensorbauteil nach einem der vorhergehenden Ansprüche, wobei das mikromechanische Sensorbauteil zumindest ein Koppelkreuz (24) mit einer ersten, zweiten, dritten und vierten Zugfeder (24a bis 24d) und einer Zwischenmasse (24e) als das mindestens eine Massen-Koppelelement (22a bis 22d, 24) umfasst, und wobei die Zwischenmasse (24e) über die erste Zugfeder (24a) mit der ersten seismischen Masse (12a), über die zweite Zugfeder (24b) mit der zweiten seismischen Masse (12b), über die dritte Zugfeder (24c) mit der dritten seismischen Masse (12c) und über die vierte Zugfeder (24d) mit der vierten seismischen Masse (12d) verbunden ist.

9. Drehratensensor mit einem mikromechanischen Sensorbauteil nach einem der vorhergehenden Ansprüche.

## Claims

1. Micromechanical sensor component for a rate-of-rotation sensor, comprising:
a mounting (10);
a first, second, third and fourth seismic mass (12a to 12d), which are arranged on the mounting (10) adjustably about an intermediate space surrounded by the four seismic masses (12a to 12d);
wherein the first, second, third and fourth seismic masses (12a to 12d) are arranged adjustably on the mounting (10) in such a way that the first seismic mass (12a) and the second seismic mass (12b) are adjustable with respect to the mounting (10) at least along a first pivot axis (14) and the third seismic mass (12c) and the fourth seismic mass (12d) are adjustable with respect to the mounting (10) at least along a second pivot axis (16), which is aligned inclined in relation to the first pivot axis (14),
and wherein each of the four seismic masses (12a to 12d) is connected to at least one other of the four seismic masses (12a to 12d) via at least one mass coupling element (22a to 22d, 24), and
a first rocker structure (26a), which is connected to the first seismic mass (12a) via a first rocker coupling element (28a) and to the second seismic mass (12b) via a second rocker coupling element (28b) and is arranged on the mounting (10) adjacent to an outer side (30a) of the third seismic mass (12c), which is directed away from the first seismic mass (12a) and the second seismic mass (12b), in such a way that the first rocker structure (26a) can be set in a first rocking motion about a specified first pivot axis (32a) with respect to the mounting (10);
**characterized in that**
the micromechanical sensor component comprises a second rocker structure (26b), which is at least connected to the first seismic mass (12a) via a third rocker coupling element (28c) and to the second seismic mass (12b) via a fourth rocker coupling element (28d) and is arranged on the mounting (10) adjacent to an outer side (30b) of the fourth seismic mass (12d), which is directed away from the first seismic mass (12a) and the second seismic mass (12b), in such a way that the second rocker structure (26b) can be set in a second rocking motion about a specified second pivot axis (32b) with respect to the mounting (10).

2. Micromechanical sensor component according to Claim 1, wherein the micromechanical sensor component comprises at least one actuator device (34a to 34d), which can be activated by means of an internal or external control and evaluation device (36) in such a way that, by means of the at least one actuator device (34a to 34d), the first seismic mass (12a) and the second seismic mass (12b) can be set in at least one first pivoting motion (38a) along at least the first pivot axis (14) and the third seismic mass (12c) and the fourth seismic mass (12d) can be set in at least one second pivoting motion (38b) along at least the second pivot axis (16).

3. Micromechanical sensor component according to Claim 2, wherein the at least one actuator device (34a to 34d) can be activated by means of the internal or external control and evaluation device (36) in such a way that, by means of the at least one actuator device (34a to 34d), the first seismic mass (12a) and the second seismic mass (12b) can be set in two antiparallel pivoting motions along at least the first pivot axis (14) as the at least one first pivoting motion (38a) and the third seismic mass (12c) and the fourth seismic mass (12d) can be set in two antiparallel pivoting motions along at least the second pivot axis (16) as the at least one second pivoting motion (38b).

4. Micromechanical sensor component according to Claim 2 or 3, wherein the first, second, third and fourth seismic masses (12a to 12d) are arranged adjustably on the mounting (10) in such a way that, during a rotation of the micromechanical sensor component at least about a rotation axis (z) aligned perpendicularly to the first pivot axis (14) and the second pivot axis (16), the first and second seismic masses (12a, 12b) that have been set in the at least one first pivoting motion (38a) can be deflected perpendicularly to the first pivot axis (14) and the third and fourth seismic masses (12c, 12d) that have been set in the at least one second pivoting motion (38b) can be deflected perpendicularly to the second pivot axis (16), whereby at least the first rocker structure (26a, 26b) can be set in the first rocking motion with respect to the mounting (10).

5. Micromechanical sensor component according to Claim 4, wherein on the first rocker structure (26a) there is formed at least one actuator electrode (46a, 46b), which during the first rocking motion of the first rocker structure (26a) is adjustable with respect to at least one stator electrode arranged on the mounting (10).

6. Micromechanical sensor component according to Claim 5, wherein the at least one actuator electrode (46a, 46b) is formed at at least one corner region of the first rocker structure (26a), which partially protrudes respectively into an intermediate gap (20a, 20b) between the first and third seismic masses (12a, 12c) or between the second and third seismic masses (12b, 12c).

7. Micromechanical sensor component according to one of the preceding claims, wherein the micromechanical sensor component comprises at least a first, second, third and fourth mass coupling element (22a to 22d) as the at least one mass coupling element (22a to 22d, 24), and wherein the first seismic mass (12a) is connected to the third seismic mass (12c) via the first mass coupling element (22a) and to the fourth seismic mass (12d) via the second mass coupling element (22b), and the second seismic mass (12b) is connected to the third seismic mass (12c) via the third mass coupling element (22c) and to the fourth seismic mass (12d) via the fourth mass coupling element (22d).

8. Micromechanical sensor component according to one of the preceding claims, wherein the micromechanical sensor component comprises at least one coupling cross (24) with a first, second, third and fourth tension spring (24a to 24d) and an intermediate mass (24e) as the at least one mass coupling element (22a to 22d, 24), and wherein the intermediate mass (24e) is connected to the first seismic mass (12a) via the first tension spring (24a), to the second seismic mass (12b) via the second tension spring (24b), to the third seismic mass (12c) via the third tension spring (24c) and to the fourth seismic mass (12d) via the fourth tension spring (24d).

9. Rate-of-rotation sensor with a micromechanical sensor component according to one of the preceding claims.

## Revendications

1. Composant de capteur micromécanique, destiné à un capteur de vitesse de rotation, comprenant :
un support (10) ;
des première, deuxième, troisième et quatrième masses sismiques (12a à 12d) qui sont disposées de manière mobile sur le support (10) autour d'un espace intermédiaire entouré par les quatre masses sismiques (12a à 12d) ;
les première, deuxième, troisième et quatrième masses sismiques (12a à 12d) étant disposées de manière mobile sur le support (10) de telle sorte que la première masse sismique (12a) et la deuxième masse sismique (12b) soient mobiles par rapport au support (10) au moins le long d'un premier axe d'oscillation (14) et que la troisième masse sismique (12c) et la quatrième masse sismique (12d) soient mobiles par rapport au support (10) le long d'un deuxième axe d'oscillation (16) incliné par rapport au premier axe d'oscillation (14),
et chacune des quatre masses sismiques (12a à 12d) étant reliée à au moins une autre des quatre masses sismiques (12a à 12d) par le biais d'au moins un élément d'accouplement de masses (22a à 22d, 24), et
une première structure à bascule (26a) qui est reliée à la première masse sismique (12a) au moins par le biais d'un premier élément d'accouplement à bascule (28a) et qui est reliée à la deuxième masse sismique (12b) par le biais d'un deuxième élément d'accouplement à bascule (28b) et qui est disposée sur le support (10) de manière adjacente à un côté extérieur (30a) de la troisième masse sismique (12c) qui est opposé à la première masse sismique (12a) et à la deuxième masse sismique (12b) de telle sorte que la première structure à bascule (26a) soit mobile par rapport au support (10) suivant un premier mouvement de basculement sur un premier axe de rotation prédéterminé (32a) ;
**caractérisé en ce que**
le composant de capteur micromécanique comprend une deuxième structure à bascule (26b) qui est reliée à la première masse sismique (12a) au moins par le biais d'un troisième élément d'accouplement à bascule (28c) et à la deuxième masse sismique (12b) par le biais d'un quatrième élément d'accouplement à bascule (28d) et qui est disposée sur le support (10) de manière adjacente à un côté extérieur (30b) de la quatrième masse sismique (12d) qui est opposé à la première masse sismique (12a) et à la deuxième masse sismique (12b) de telle sorte que la deuxième structure à bascule (26b) soit mobile par rapport au support (10) suivant un deuxième mouvement de basculement autour d'un deuxième axe de rotation prédéterminé (32b).

2. Composant de capteur micromécanique selon la revendication 1, le composant de capteur micromécanique comprenant au moins un mécanisme d'actionnement (34a à 34d) qui peut être commandé au moyen d'un mécanisme de commande et d'évaluation (36) interne ou externe de telle sorte que, au moyen de l'au moins un mécanisme d'actionnement (34a à 34d), la première masse sismique (12a) et la deuxième masse sismique (12b) soient mobiles suivant au moins un premier mouvement d'oscillation (38a) le long d'au moins le premier axe d'oscillation (14) et la troisième masse sismique (12c) et la quatrième masse sismique (12d) suivant au moins un deuxième mouvement d'oscillation (38b) le long d'au moins le deuxième axe d'oscillation (16).

3. Composant de capteur micromécanique selon la revendication 2, l'au moins un mécanisme d'actionnement (34a à 34d) étant commandé au moyen du mécanisme de commande et d'évaluation (36) interne ou externe de telle sorte que, au moyen de l'au moins un mécanisme d'actionnement (34a à 34d), la première masse sismique (12a) et la deuxième masse sismique (12b) soient mobiles suivant deux mouvements d'oscillation antiparallèles le long d'au moins le premier axe d'oscillation (14) en tant que l'au moins un premier mouvement d'oscillation (38a) et la troisième masse sismique (12c) et la quatrième masse sismique (12d) soient mobiles suivant deux mouvements d'oscillation antiparallèles le long d'au moins le deuxième axe d'oscillation (16) en tant que l'au moins un deuxième mouvement d'oscillation (38b).

4. Composant de capteur micromécanique selon la revendication 2 ou 3, les première, deuxième, troisième et quatrième masses sismiques (12a à 12d) étant disposées de manière mobile sur le support (10) de telle que, pendant une rotation du composant de capteur micromécanique au moins autour d'un axe de rotation (z) perpendiculaire au premier axe d'oscillation (14) et au deuxième axe d'oscillation (16), les première et deuxième masses sismiques (12a, 12b) déplacées suivant l'au moins un premier mouvement d'oscillation (38a) puissent être déviées perpendiculairement au premier axe d'oscillation (14) et les troisième et quatrième masses sismiques (12c, 12d) déplacées suivant l'au moins un deuxième mouvement d'oscillation (38b) puissent être déviées perpendiculairement au deuxième axe d'oscillation (16), de sorte qu'au moins la première structure à bascule (26a, 26b) est mobile par rapport au support (10) suivant le premier mouvement de basculement.

5. Composant de capteur micromécanique selon la revendication 4, au moins une électrode d'actionnement (46a, 46b) étant formée au niveau de la première structure à bascule (26a), laquelle électrode d'actionnement est mobile par rapport à au moins une électrode de stator, disposée sur le support (10), pendant le premier mouvement de basculement de la première structure à bascule (26a).

6. Composant de capteur micromécanique selon la revendication 5, l'au moins une électrode d'actionnement (46a, 46b) étant formée au niveau d'au moins une zone d'angle de la première structure à bascule (26a), laquelle zone d'angle fait saillie partiellement dans un espace intermédiaire (20a, 20b) ménagé entre les première et troisième masses sismiques (12a, 12c) ou entre les deuxième et troisième masses sismiques (12b, 12c).

7. Composant de capteur micromécanique selon l'une des revendications précédentes, le composant de capteur micromécanique comprenant au moins un premier, deuxième, troisième et quatrième élément d'accouplement de masses (22a à 22d) en tant que l'au moins un élément d'accouplement de masses (22a à 22d, 24), et la première masse sismique (12a) étant reliée à la troisième masse sismique (12c) par le biais du premier élément d'accouplement de masses (22a) et à la quatrième masse sismique (12d) par le biais du deuxième élément d'accouplement de masses (22b) et la deuxième masse sismique (12b) étant reliée à la troisième masse sismique (12c) par le biais du troisième élément d'accouplement de masses (22c) et à la quatrième masse sismique (12d) par le biais du quatrième élément d'accouplement de masses (22d).

8. Composant de capteur micromécanique selon l'une des revendications précédentes, le composant de capteur micromécanique comprenant au moins un croisillon d'accouplement (24) muni de premier, deuxième, troisième et quatrième ressorts de traction (24a à 24d) et une masse intermédiaire (24e) en tant que l'au moins un élément d'accouplement de masses (22a à 22d, 24), et la masse intermédiaire (24e) étant reliée à la première masse sismique (12a) par le biais du premier ressort de traction (24a), à la deuxième masse sismique (12b) par le biais du deuxième ressort de traction (24b), à la troisième masse sismique (12c) par le biais du troisième ressort de traction (24c) et à la quatrième masse sismique (12d) par le biais du quatrième ressort de traction (24d).

9. Capteur de vitesse de rotation comprenant un composant de capteur micromécanique selon l'une des revendications précédentes.
